(19) Europäisches Patentamt

European Patent Office

Office européen des brevets

(11) Publication number: **0 270 865 B1**

# EUROPEAN PATENT SPECIFICATION

(45) Date of publication of patent specification: 25.08.93    (51) Int. Cl.5: **C08L 33/10**, //(C08L33/10, 51:00)

(21) Application number: 87116676.5

(22) Date of filing: 11.11.87

(54) **Low haze transparent compositions and process for preparing them.**

(30) Priority: 11.11.86 IT 2228086

(43) Date of publication of application:
15.06.88 Bulletin 88/24

(45) Publication of the grant of the patent:
25.08.93 Bulletin 93/34

(84) Designated Contracting States:
AT BE CH DE ES FR GB GR LI NL SE

(56) References cited:
EP-A- 0 002 813
US-A- 3 808 180
US-A- 4 180 529

(73) Proprietor: **ELF ATOCHEM ITALIA S.r.l.**
**Via Gioacchino Murat 17**
**I-20159 Milano(IT)**

(72) Inventor: **Visani, Francesco, Dr.**
**12, via Malpighi**
**I-20100 Milano(IT)**
Inventor: **Tavazzani, Carlo**
**29, via Meda**
**I-20100 Milano(IT)**
Inventor: **Ajroldi, Giuseppe, Dr.**
**9, via Campiglio Ambrogio**
**I-20133 Milano(IT)**
Inventor: **Castiglioni, Giovanni**
**9, via Elalamein**
**I-22070 Locate (Como)(IT)**

(74) Representative: **Weinhold, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**D-8000 München 40 (DE)**

Rank Xerox (UK) Business Services
(3.10/3.6/3.3.1)

**Description**

The present invention relates to low haze impact-resistant transparent compositions, and to the process for preparing them.

More particularly, the present invention relates to impact-resistant transparent compositions, endowed with low-haze characteristics within a wide temperature range, based on homopolymers and/or copolymers or alkylmethacrylates and alkylacrylates, and to the related preparation process.

It is known that, in order to obviate the brittleness of thermoplastic materials, a generally used technique consists in blending them with relatively small amounts of elastomers.

According to these techniques, amounts of elastomers, typically tanging from 5 to 35% by weight, are incorporates and dispersed in the rigid thermoplastic matrix. The resulting materials shows characteristics of impact and crack resistance, elongation at break and crack energy, several times higher than the thermoplastic resin used as the starting material.

In the case of transparent polymers, such as the acrylic resins, dispersing an elastomeric phase into them according to the above-said techniques can cause deteriorating optical properties, such as an increase in haze, which is more marked the more different the refractive indices of the continuous resin phase, and the dispersed elastomeric phase are from each other.

In order to obviate such a drawback, compositions were proposed, e.g. in GB-A- 1,001,953 and 994,924, which are based on acrylic resins, such as polymethyl methacrylate, intimately blended with grafted materials comprising an elastomeric core coated with analogous acrylic resins.

Finished articles obtained from these compositions showed good mechanical properties, as well as values of optical properties similar to those of the acrylic resin used as the starting material, at room temperature, but tended to opacify already at slightly different temperatures.

Further transparent compositions were subsequently proposed, wherein the above-said drawback was overcome.

These compositions, comprising a continuous phase, the acrylic resin, and a dispersed phase consisting of substantially spherical polymeric particles of the multi-layer type, make it possible to obtain finished articles endowed with satisfactory optical properties within a wide temperature range.

The used multi-layer particles consist of a central core, based on acrylic resins, on which a plurality of layers of resin, or of acrylic elastomer, having different compositions, according to circumstances, are grafted.

But in this case too, the compositions are not without drawbacks; in fact, such multi-layer products, obtained in aqueous emulsion, consist of particles having varying dimensions and diameters, with values which, although having an average value within the required limits to provide a reinforced thermoplastic matrix, show a broad distribution.

This face can cause deterioration of the properties of the finished articles, in that the particles having dimensions smaller than the average value are not very efficient in improving the mechanical properties, and the particles having larger dimensions may reduce the optical quality of the end products to which impact-resisitance properties have been given.

Besides the above, the finished articles obtained from acrylic resins modified with the multi-layer polymeric products, even if they show rather satisfactory optical properties with varying temperatures, show a more or less light blue hue, which cannot be eliminated even when suitable optical modifiers are used.

Such phenomenon, generally indicated by the term "colour reversal", can be observed in transparent heterophasic systems when the refractive index of the dispersed phase is even only slightly higher than that of the continuous phase.

Thus, such finished articles show poorer aesthetical properties than the acrylic resin as such.

US-A 4,180,529 claims a resilient, acrylic, multistage, sequentially produced graft polymer comprising:

a) an elastomeric (resilient) first stage core, having a $T_g$ from -60°C to 25°C, preferably -35 to -20°C, in an amount of 1 to 20% by weight of the polymer;

b) a nonelastomeric (non resilient) relatively hard 2nd stage ($T_g > 25°C$) in an amount of 15 to 65% by weight;

c) an elastomeric (resilient) 3rd stage as a) above in an amount of 30 to 75% by weight;

d) a nonelastomeric stage as b) above in an amount of 5 to 40% by weight.

The applicant has found out that by using this method it is difficult to control the size distribution and above all the variation coefficient relative to the average value. This is essential to obtain good optical properties combined with good mechanical properties.

Object of the present invention was to prepare compositions which do not show the above-mentioned drawbacks. The problem could be solved by using an elastomer but doing a swelling previous to the formation of the second layer.

Operating this way the applicant has unexpectedly found that the variation coefficient relative to the average value can be maintained in very narrow limits, less than 0.1 and reaching values of 0.04. This permits to get better properties, specifically optical combined with good mechanical properties.

The low haze impact-resistant transparent compositions of the invention comprise

a) 40-99% by weight of a thermoplastic resin based on homopolymers and/or copolymers of alkyl esters of methacrylic acid with alkyl esters of acrylic acid, wherein the alkyl group contains from 1 to 8 carbon atoms, and

b) 60-1% by weight of a polymer having a multi-layer structure, comprising:
- a central core based on a crosslinked elastomer intimately blended with an acrylic resin as defined in (a);
- an optional first layer of the said resin grafted on said central core; and
- a second layer of crosslinked elastomer grafted on said first resin layer or said core, resp.; and
- a third layer of resin grafted on said second layer of crosslinked elastomer,

wherein the central core comprises from 0.01 to 10% by weight, e.g. 0.3 to 7% by weight, of elastomer and the elastomer is selected from products having a glass transistion temperature equal to, or lower than, 25°C, and more preferably lower than -10°C.

Examples of compositions according to the present invention are those wherein the multi-layer polymer comprises:

5-60% by weight of central core;
0-55% by weight of the first grafted layer of acrylic resin;
20-50% by weight of crosslinked elastomer present as the second layer; and
15-35% by weight of external acrylic resin present as the third layer.

In the central core, the amount of elastomer ranges from 0.01 to 10% by weight.

Preferred compositions are those wherein the multi-layer polymer comprises:

8-30% by weight of central core;
10-40% by weight of first grafted layer of acrylic resin;
25-45% by weight of crosslinked elastomer present as the second layer; and
18-30% by weight of external acrylic resin present as the the third layer.

In the central core, the preferred amount of elastomer ranges from 0.3 to 7% by weight.

The alkyl esters of methacrylic acid which can be used to prepare the acrylic resin used in the composition of the present invention are selected from methyl methacrylate, ethyl methacrylate, isopropyl methacrylate, sec.-butyl methacrylate, tert.-butyl methacrylate, and so forth, optionally blended with minor amounts of alkyl and/or alkoxy-alkyl esters of acrylic acid and/or of vinyl monomers.

A preferred produce is a polymer of methyl methacrylate containing 0-25% by weight, preferably 5-20% by weight, of one or more comonomers selected from acrylic acid esters, such as, e.g., ethyl, methyl, butyl, isopropyl acrylate, the alkoxy-alkyl acrylates,such as 2-methoxy-ethyl acrylate and the vinyl monomers, such as, e.g., acrylonitrile, acrylamide, styrene and its derivatives.

A still more preferred product is a polymer of methyl methacrylate containing 5-20% by weight of ethyl or methyl acrylate.

The crosslinked elastomer in the multi-layer polymer used in the composition of the present invention is selected from products having a glass transition temperature equal to, or lower than, 25°C, and preferably lower than -10°C.

Examples of particularly suitable elastomers for use in the present composition are those which can be obtained from alkyl esters of acrylic acid, wherein the alkyl group contains from 1 to 8 carbon atoms, such as n-butyl acrylate, isobutyl acrylate, 2-ethyl-hexyl acrylate, methyl acrylate, ethyl acrylate, propyl acrylate, isopropyl acrylate, or from alkyoxy-alkyl acrylates, such as 2-methoxy-ethyl acrylate, or from monomers having a double ethylenic unsaturation, such as butadiene, substituted butadiene, e.g. isoprene, chloroprene, 2,3-dimethylbutadiene, optionally mixed with up to 30% by weight of vinyl monomers.

The preferred vinyl monomer is styrene and its derivatives, such as methyl-styrenes, e.g. ortho- and para-methyl-styrene, ortho- and para-ethyl-styrene, alpha-methyl-styrenes, mono-, di-, tri-, tetra- and penta-chloro-styrene.

The preferred crosslinked elastomer in the composition of the present invention is the copolymer constituted by butyl acrylate containing styrene in amounts varying from 5 to 30%, preferably from 10 to 20%, and particularly 10 to 14%, by weight.

The elastomer used in the central core can be the same as, or different from, that used in the second layer of the multi-layer copolymer employed in the composition of the present invention.

EP 0 270 865 B1

The layers of acrylic resin, and of crosslinked elastomer constituting the polymer having the multi-layer structure used in the composition of the present invention are respectively grafted on the central core and on each other, by means of suitable grafting and crosslinking agents having two double bonds in their molecule, with different degrees of reactivity.

Those comonomers are preferably used in amounts of from 0.05 to 2% by weight, and most preferably of from 0.1 to 1 % by weight, relative to the total monomers of each layer, including the central core, and can be selected from allyl acrylate, diallyl maleate, allyl methacrylate, diallyl phthalate, diallyl fumarate, triallyl cyanurate.

Furthermore, the elastomer can be crosslinked by means of the normal crosslinking monomers known in the art.

Such monomers are used in amount of from 0 to 5% by weight relative to the elastomer; they are selected from those having a double unsaturation, and perform the function of creating permanent crosslings between the elastomer chains. Examples of crosslinkers are: ethylene glycol diacrylate and dimethacrylate, di-, tri-, tetra-ethylene glycol dimethacrylate and diacrylate, 1,3- and 1,4-butylene glycol diacrylate and dimethacrylate, divinylbenzene, trivinylbenzene.

Optionally, from 0.1 to 2% by weight of vinyl monomers containing a functional group of the polar type, performing the function of establishing further crosslinkages between the chains, can be present in the elastomer.

Examples of such products are acrylic acid, methacrylic acid, glycidyl methacrylate or acrylate, acrylamide, methacrylamide.

The low haze, impact-resistant transparent compositions of the present invention may be obtained by means of a process comprising blending:

a) 40-99% by weight of an acrylic resin based on homopolymers and/or copolymers of alkyl esters of methacrylic acid with alkyl esters of acrylic acid, wherein the alkyl group contains from 1 to 8 carbon atoms, and

b) 60-1% by weight of a polymer having a multi-layer structure, obtained according to the following steps:

i) preparation of the seed of elastomer in aqueous emulsion by feeding and polymerizing monomers selected from alkyl or alkoxy-alkyl esters of acrylic acid, wherein the alkyl group contains from 1 to 8 carbon atoms, and those containing a double ethylenic unsaturation, optionally blended with up to 30% by weight of vinyl monomer, and containing from 0.05 to 2% by weight of grafting monomers;

ii) swelling of the above seed, by means of the absorption of one or more monomers selected from the alkyl esters of methacrylid acid, wherein the alkyl group contains from 1 to 8 carbon atoms, optionally in mixture with minor amounts of $C_1$-$C_8$ alkyl or alkoxy-alkyl esters of acrylic acid, and containing 0.05-2% by weight of grafting monomers;

iii) polymerization of said alkyl esters absorbed in the elastomeric seed, to yield the central core;

iv) optional growth of said central core with a first layer of acrylic resin by feeding and polymerizing esters of methacrylic acid, optionally mixed with minor amounts of $C_1$-$C_8$ alkyl or alkoxy-alkyl esters of acrylic acid, and containing 0.05-2% by weight of grafting monomers;

v) growth of the so-obtained particles with a second layer of elastomer, grafted on the first layer through feeding and polymerization of monomers selected from the $C_1$-$C_8$ alkyl or alkoxy alkyl esters of acrylic acid and those having a double ethylenic unsaturation, possibly mixed with up to 30% by weight of vinyl monomer and containing 0.05-2% by weight of grafting monomers;

vi) growth of the so-obtained particles with a third layer of resin, grafted on the second layer of elastomer, through feeding and polymerization of esters of methacrylic acid, possibly mixed with minor amounts of $C_1$-$C_8$ alkyl or alkoxy-alkyl esters of acrylic acid and of vinyl monomers, until the desired particle size is reached.

At the end of the operations (i) to (vi), there is obtained an aqueous emulsion of polymeric particles having a multi-layer structure, at a concentration of from 25 to 50% by weight, and having diameters lower than 500 nm, but preferably ranging from 100 to 300 nm.

The distribution of the values of diameters within these ranges is very narrow; as can be seen from the microphotographs obtained by transmission electron microscopy, the variation coefficient relative to the average value of the diameters of the particles is lower than 0.1.

The polymeric product with multi-layer structure can be recovered from the emulsion by means of known techniques, such as, e.g., precipitation by coagulation, spray-drying, thin-film drying, and so forth.

According to a preferred embodiment of the process of the present invention, the polymerization reactions in steps (i) through (vi) are carried out in the presence of the usual polymerization surfactants and initiators known in the art.

4

Examples of surfactants are: sulphonated alkylbenzenes, such as sodium dodecyl-benzene sulphonate, sulphonated $(C_8-C_{18})$-alkyl-phenoxy-polyethylenes, sodium lauryl sulphate, long-chain amine salts, salts or sulphonic acids or carboxylic acids from long-chain linear or branched paraffins, and so forth.

Examples of free-radical initiators are:

- peroxides, e.g., peranhydrides, peresters, persulphates, hydroperoxides, hydrogen peroxide, and so forth;
- azo-compounds, e.g., azo-bis-isobutyronitrile, and so forth.

Preferably, as the initiators, redox couples are used, such as combinations of:

- tert.-butyl hydroperoxide, tert.-amyl hydroperoxide, cumene hydroperoxide, di-isopropyl-benzene hydroperoxide, tert.-butyl peracetate, etc., in combination with sodium-formaldehyde sulphoxylate, sodium metabisulphite, sodium hydrosulphite, and so forth.

The polymerization reactions described in steps (i) to (vi) can be carried out batchwise or semi-continuously, at temperatures of from 15 to 70°C, and more preferably, of from 15 to 60°C in case of a batchwise reaction mode, and of from 30 to 70°C in case of a semi-continuous process.

For each step, amounts of initiator ranging from 0.01 to 2% by weight and of surfactant of from 0 to 2% by weight, relative to the total amount of monomers, may be used.

The amounts of surfactants used in the steps following the first one are always such as to avoid the generation of new particles.

To the low-haze impact-resistant transparent compositions of the present invention, the normal additives known in the art can be added, such as thermal and light stabilizers, antioxidants, dyes, lubricants, and so forth.

The compositions of the present invention are characterized by the following properties:

- light transmittance at room temperature, on 3-mm thick specimens: higher than 90%, as measured according to ASTM D 1003;
- haze at room temperature, on 3-mm thick specimens: from 1.5 to 2.5%, as measured according to ASTM D 1003;
- light transmittance at 50°C: higher than 80%;
- haze at 50°C: lower than 10%;
- "colour reversal": absent;
- flexural elastic modulus: from 1000 to 3000 MPa, as measured according to ASTM D 790;
- tenxile yield stress: from 25 to 60 MPa, as measured according to ASTM D 638;
- elongation at break by tensile stress: from 25 to 100%, as measured according to ASTM D 638;
- "Charpy" impact resistance: from 2 to 10 kJ/m$^2$, as measured according to ASTM D 256;
- "Charpy" impact resistance, with sharp notch: from 1 to 6 kJ/m$^2$;
- Rockwell hardness: from 35 to 90 (scale M), as measured according to ASTM C 785;
- Vicat grade (5 kg, 50°C C/min): from 80 to 100°C, as measured according to ISO 306, method B, rate A.

The method used in order to carry out the measurement of the "Charpy" impact resistance with sahrp notch is based on the principles of crack mechanics for the evaluation of the toughness of impact-resistant composite materials with which a considerable plastic deformation is associated (J.R.Rice, P.C. Paris, J.G.Merkle ASTM STP 536, 1973, 231). The herein adopted evaluation technique is a simplification of such principles. It was developed in such a way, as to measure the toughness during the crack propagation step (T. Casiraghi, G. Castiglioni, Proceedings of the Third National Meeting, Turin May 22 - 23, 1986), under extremely critical conditions of notch sharpness, which can occur in the finished articles, connected with defects, junctures, microcracks, and so forth.

The tests were carried out according to the Charpy geometry on press-moulded specimens having a thickness (B) of 3mm width (W) of 10 mm, and length of 90 mm. The depth (a) of the sharp notch, produced by means of a normal razor blade, was 5.4 mm, and the distance between the supports was 70 mm.

The so-obtained products underwent an impact at the speed of 0.5 m/second.

The impact strength $(J_T^*)$ is determined by normalizing the total dissipated energy $(U_R)$ necessary for completely breaking the specimen relative to the resisting section

$$J_T^* = U_R/B\left[W - a\right].$$

In order to give a better understanding of the present invention, some illustrative but not limitative Examples are given in the following.

Example 1 (Comparative Example)

The emulsion A and the solutions B and C are separately prepared.

| Emulsion A | Parts by Weight |
|---|---|
| Butyl acrylate | 80.55 |
| Styrene | 18.95 |
| Allyl methacrylate | 0.5 |
| Water | 100.0 |
| Sodium salt of sulphonated linear $(C_{14}-C_{16})$-paraffin | 0.6 |
| Sulphuric acid | 0.001 |

| Solution B | Parts by Weight |
|---|---|
| Water | 14.85 |
| tert.-Butyl-hydroperoxide | 0.05 |

| Solution C | Parts by Weight |
|---|---|
| Water | 14.85 |
| Rodite A ** | 0.15 |

**) sodium-formaldehyde sulphoxylate (reducing agent)

A reactor equipped with a condenser is charged with 72 parts of demineralized water, 0.5 parts of sodium salt of a sulphonated linear $(C_{14}-C_{16})$ paraffin and 0.001 parts of sulphuric acid.

The resulting mixture is stirred under a nitrogen atmosphere, and its temperature is increased to 55°C. Thereafter

44.4 parts of emulsion A
0.33 parts of solution B
0.33 parts of solution C
are added in the given order.

The reactor is maintained at 55°C for 20 minutes, then over a time of 180 minutes the residual amounts of emulsion A and solutions B an C are added.

The reactor is maintained for 1 hour at a temperature of 55°C and is then cooled; the obtained latex contains approximately 33% of polymer.

To a reactor equipped with condenser, 75.3 parts of water and 7.8 parts of elastomer seed latex as previously prepared are added.

The resulting mixture is stirred under a nitrogen atmosphere, and its temperature is increased to 60°C; then the following emulsions and solutions, separately prepared, are added:

| 1) emulsion D | from time 0 to hr 9 |
| 2) emulsion E | from hr 9 to hr 15 |
| 3) solution F | from time 0 to hr 15 |
| 4) solution G | from time 0 to hr 15 |

| Emulsion D | Parts by Weight |
|---|---|
| Butyl acrylate | 47.52 |
| Styrene | 11.18 |
| Allyl methacrylate | 0.5 |
| Water | 100.0 |
| Sodium salt of sulphonated linear $(C_{14}-C_{16})$-paraffin | 0.35 |
| Sulphuric acid | 0.0005 |

| Solution E | Parts by Weight |
|---|---|
| Methyl methacrylate | 34.85 |
| Butyl acrylate | 5.25 |
| Styrene | 0.98 |

| Solution F | Parts by Weight |
|---|---|
| Water | 30.3 |
| tert.-Butyl-hydroperoxide | 0.05 |

| Solution G | Parts by Weight |
|---|---|
| Water | 30.3 |
| Rodite A | 0.15 |

The reactor is maintained at the temperature of 60°C for 1 hour, and is then cooled. The so-obtained latex has a content of approximately 33.8% of polymer, and consists of substantially mono-dispersed particles of grafted acrylic elastomer, having a diameter of approximately 200 nm (variance coefficient 0.05).

The latex is then coagulated by high-temperature treatment with calcium chloride in water at concentrations of 0.3%; the polymer, as a fine powder, is filtered, washed with water, and dried.

The so-obtained grafted acrylic elastomer is blended, in various ratios, with a copolymer consisting of methyl methacrylate and ethyl acrylate in a weight ratio of 96/4 having an intrinsic viscosity in chloroform at 25°C of 65 ml/g.

The blends are extruded to yield impact-resistant granules endowed with the optical and physico - mechanical characteristics reported in Table 1.

7

Example 2

Preparation of a seed of acrylic elastomer:

To a reactor equipped with a condenser, 72 parts of demineralized water, 0.5 parts of sodium salt of a sulphonated linear ($C_{14}$-$C_{16}$) paraffin and 0.001 parts of sulphuric acid are added.

The resulting mixture is stirred under a nitrogen atmosphere, and its temperature is increased to 55°C; then in the given order, the following - separately prepared - emulsions and solutions are added:

4.44 parts of emulsion A

0.33 parts of solutions B

0.33 parts of solution C

The reactor is maintained at 55°C for 20 minutes; then, over a time of 180 minutes, the residual amounts of emulsion A and solutions B and C are added.

The reactor is maintained for 1 hour at a temperature of 55°C and is then cooled; the obtained latex contains approximately 33% of polymer.

| Emulsion A | Parts by Weight |
|---|---|
| Butyl acrylate | 83.95 |
| Styrene | 15.55 |
| Allyl methacrylate | 0.5 |
| Water | 100.0 |
| Sodium salt of sulphonated linear ($C_{14}$-$C_{16}$)-paraffin | 0.6 |
| Sulphuric acid | 0.001 |

| Solution B | Parts by Weight |
|---|---|
| Water | 14.85 |
| tert.-Butyl-hydroperoxide | 0.05 |

| Solution C | Parts by Weight |
|---|---|
| Water | 14.85 |
| Rodite A | 0.15 |

8

Preparation of a grafted multi-layer acrylic elastomer:

To a reactor equipped with condenser, the following materials are charged:

|  | Parts by Weight |
|---|---|
| Water | 59.3 |
| Seed latex | 9.4 |
| Sodium salt of sulphonated linear $(C_{14}-C_{16})$-paraffin | 0.075 |

The resulting mixture is stirred under a nitrogen atmosphere at a temperature of 25°C; then a solution consisting of 11.08 parts of methyl methacrylate, 1.23 parts of ethyl acrylate and 0.062 parts of allyl methacrylate is added.

The contents of the reactor are stirred at room temperature for approximately 2 hours, then a solution of 0.003 parts of tert.-butyl-hydroperoxide in 3 parts of water, and thereafter a solution of 0.009 parts of Rodite A in 3 parts of water are added.

The temperature is increased, over a time of approximately 30 minutes, to 55°C; then, starting at this time, the following materials are added:

| | |
|---|---|
| 1) emulsion D | from time 0 to hr 4 |
| 2) emulsion E | from hr 4 to hr 10 |
| 3) solution F | from hr 10 to hr 13 |
| 4) solution G | from time 0 to hr 13 |
| 5) solution H | from time 0 to hr 13 |

| Emulsion D | Parts by Weight |
|---|---|
| Methyl methacrylate | 23.08 |
| Ethyl acrylate | 2.56 |
| Allyl methacrylate | 0.13 |
| Water | 27.8 |
| Sodium salt of sulphonated linear $(C_{14}-C_{16})$-paraffin | 0.17 |
| Sulphuric acid | 0.0002 |

| Emulsion E | Parts by Weight |
|---|---|
| Butyl acrylate | 31.16 |
| Styrene | 5.77 |
| Allyl methacrylate | 0.19 |
| Water | 39.18 |
| Sodium salt of sulphonated linear $(C_{14}-C_{16})$-paraffin | 0.23 |
| Sulphuric acid | 0.0003 |

| Solution F | Parts by Weight |
|---|---|
| Methyl methacrylate | 21.00 |
| Butyl acrylate | 3.12 |
| Styrene | 0.59 |

| Solution G | Parts by Weight |
|---|---|
| Water | 30.3 |
| tert.-Butyl-hydroperoxide | 0.044 |

| Solution H | Parts by Weight |
|---|---|
| Water | 30.3 |
| Rodite A | 0.13 |

The reactor is maintained at the temperature of 55°C for 1 hour, and is then cooled.

The so-obtained latex has a content of approximately 34% of polymer, and consists of substantially mono-dispersed particles of grafted acrylic elastomer, with a diameter of approximately 185 nm (variance coefficient 0.04).

The latex is then coagulated by high-temperature treatment with calcium chloride in water at a concentration of 0.35%; the polymer, which has the form of a fine powder, is filtered, washed with water, and dried.

The so-obtained grafted acrylic elastomer is blended, in various ratios, with a copolymer consisting of methyl methacrylate and ethyl acrylate in a weight ratio of 96/4 having an intrinsic viscosity in chloroform at 25°C of 65 ml/g.

The blends are extruded to yield impact-resistant granules having optical and physico - mechanical characteristics as reported in Table 1.

1. Claims

1. Low-haze impact-resistant transparent compositions which comprise:

TABLE 1

| PROPERTY (A) | | METHOD | UNIT OF MEASURE-MENT | PMMA (B) | Example 1 (% of grafted) | | | Example 2 (% of grafted) | | |
|---|---|---|---|---|---|---|---|---|---|---|
| | | | | | 16 | 25 | 33 | 21 | 30 | 36 |
| OPTICAL PROPERTIES | | | | | | | | | | |
| Transmittance | at 23°C | ASTM D 1003 | % | 91.5 | 88 | 88.5 | 89.2 | 90.5 | 91.2 | 91 |
| | at 50°C | ASTM D 1003 | % | 91.5 | 73 | 73.5 | 74 | 83 | 82.5 | 83 |
| Haze | at 23°C | ASTM D 1003 | % | 0.5 | 2.5 | 3.0 | 2.8 | 1.8 | 1.5 | 2.0 |
| | at 50°C | ASTM D 1003 | % | 0.5 | 26 | 28.5 | 27 | 8 | 7.5 | 8 |
| "Colour Reversal" | | | | absent | absent | absent | absent | absent | absent | absent |
| MECHANICAL PROPERTIES | | | | | | | | | | |
| Flexural Elastic Modulus | | ASTM D 790 | MPa | 3200 | 2550 | 2100 | 1750 | 2550 | 2350 | 2100 |
| Tensile Stress | | ASTM D 638 | | | | | | | | |
| – Yield stress | | | MPa | 73 | 50 | 44.5 | 38 | 50 | 46 | 40 |
| – Elongation at break | | | % | 5 | 10 | 15 | 40 | 42 | 65 | 94 |
| Impact resistance | | | | | | | | | | |
| – Charpy – "blunt notch" | | ASTM D 256 | $kJm^{-2}$ | 1.5 | 4.0 | 5.5 | 6.5 | 4.7 | 5.3 | 6.5 |
| – Charpy – "sharp notch" | | see specification | $kJm^{-2}$ | 0.25 | 1.8 | 2.5 | 3.5 | 3.7 | 4.1 | 4.6 |
| Rockwell Hardness | | ASTM D 785 | Scale M | 93 | 72 | 44 | 4 | 71 | 63 | 44 |
| THERMAL PROPERTIES | | | | | | | | | | |
| Vicat, 5 kg, 50°C/minute | | ISO 306 Method B, Rate A | °C | 102 | 100 | 98 | 94 | 98 | 96 | 92 |

(A) The mechanical and thermal tests were performed on press-moulded specimens, in accordance with ASTM D 788 Standard.

(B) 96/4 by weight methyl methacrylate/ethyl acrylate copolymer, intrinsic viscosity ($CHCl_3$, 5°C) of 65 ml/g.

EP 0 270 865 B1

a) 40-99% by weight of a thermoplastic resin based on homopolymers and/or copolymers of alkyl esters of methacrylic acid with alkyl esters of acrylic acid, wherein the alkyl group contains from 1 to 8 carbon atoms, and

b) 60-1% by weight of a polymer having a multi-layer structure, comprising:

- a central core based on a crosslinked elastomer intimately blended with an acrylic resin as defined in (a);
- an optional first layer of the said acrylic resin grafted on said central core; and
- a second layer of crosslinked elastomer grafted on said first resin layer or said core, resp.; and
- a third layer of acrylic resin grafted on said second layer of crosslinked elastomer,

wherein the central core comprises from 0.01 to 10% by weight, e.g. 0.3 to 7% by weight, of elastomer and the elastomer is selected from products having a glass transition temperature equal to, or lower than, 25°C, and more preferably lower than -10°C.

2. Compositions according to claim 1, wherein the multi-layer polymer comprises:

5-60% by weight, e.g. 8 to 30% by weight, of central core;

0-55% by weight, e.g. 10 to 40% by weight, of the first grafted layer of acrylic resin;

20-50% by weight, e.g. 25 to 45% by weight, of crosslinked elastomer present as the second layer; and

15-35% by weight, e.g. 18 to 30% by weight, of external acrylic resin present as the third layer.

3. Composition according to any of the preceding claims, wherein the alkyl esters of methacrylic acid are selected from methyl methacrylate, ethyl methacrylate, isopropyl methacrylate, sec.-butyl methacrylate, tert.-butyl methacrylate, optionally mixed with minor amounts of alkyl or alkoxy-alkyl esters of acrylic acid, or of vinyl monomers.

4. Composition according to any of the preceding claims, wherein the acrylic resin is a polymer of methyl methacrylate containing 0-25% by weight, preferably 5-20% by weight, of one or more comonomers selected from acrylic acid esters, such as ethyl, methyl, butyl, isopropyl acrylate, the alkoxy-alkyl acrylates such as 2-methoxy-ethyl acrylate and the vinyl monomers, such as acrylonitrile, acrylamide, styrene and its derivatives.

5. Compositions according to claim 4, wherein the acrylic resin is based on methyl methacrylate containing 5-20% by weight of ethyl or methyl acrylate.

6. Compositions according to any of the preceding claims, wherein the elastomer is selected from those obtainable from alkyl esters of acrylic acid, wherein the alkyl group contains from 1 to 8 carbon atoms, such as n-butyl acrylate, isobutyl acrylate, 2-ethyl-hexyl acrylate, methyl acrylate, ethyl acrylate, propyl acrylate, isopropyl acrylate or from alkoxy-alkyl acrylates, such as 2-methoxy-ethyl acrylate or from monomers having a double ethylenic unsaturation, such as butadiene, substituted butadiene, such as isoprene, chloroprene, 2,3-dimethylbutadiene, optionally mixed with up to 30% by weight of vinyl monomers, e.g. styrene and its derivatives, such as methyl-styrenes, e.g. ortho- and para-methyl-styrene, ortho- and para-ethyl-styrene, alpha-methyl-styrenes, mono-, di-, tri-, tetra- and penta-chloro-styrene.

7. Composition according to any of the preceding claims, wherein the elastomer is the copolymer constituted by butyl acrylate containing styrene in amounts of from 5 to 30% by weight, preferably of from 10 to 14%.

8. Compositions according to any of the preceding claims, comprising from 0.05 to 2% by weight, and preferably from 0.1 to 1% by weight, per each individual layer, including the central core, of grafting and cross-linking monomers selected from allyl acrylate, diallyl maleate, allyl methacrylate, diallyl phthalate, diallyl fumarate, triallyl cyanurate.

9. Process for preparing low-haze impact-resistant transparent compositions according to any of the preceding claims, comprising blending:

a) 40-99% by weight of an acrylic resin based on homopolymers and/or copolymers of alkyl esters of methacrylic acid with alkyl esters of acrylic acid, wherein the alky group contains from 1 to 8 carbon atoms; and

12

b) 60-1% by weight of a polymer having a multi-layer structure, obtained according to the following steps:

i) preparation of a seed of elastomer in aqueous emulsion by feeding and polymerizing monomers selected from alkyl or alkoxy-alkyl esters of acrylic acid, wherein the alkyl group contains from 1 to 8 carbon atoms, and those containing a double ethylenic unsaturation, optionally mixed with up to 30% by weight of vinyl monomer, and containing from 0.05 to 2% by weight of grafting monomers;

ii) swelling of the above seed, by means of the absorption of one or more monomers selected from the alkyl esters of methacrylic acid, wherein the alkyl group contains from 1 to 8 carbon atoms, optionally mixed with minor amounts of $C_1$-$C_8$ alkyl or alkoxy-alkyl esters of acrylic acid, and containing 0.05-2 % by weight of grafting monomers ;

iii) polymerization of said alkyl esters absorbed in the elastomeric seed, to yield the central core;

iv) possible growth of said central core with a first layer of acrylic resin by feeding and polymerizing esters of methacrylic acid, optionally mixed with minor amounts of $C_1$-$C_8$ alkyl or alkoxy-alkyl esters of acrylic acid, and containing 0.05-2% by weight of grafting monomers;

v) growth of the so-obtained particles with a second layer of elastomer, grafted on the first layer through feeding and polymerization of monomers from the $C_1$-$C_8$ alkyl or alkoxy alkyl esters of acrylic acid, and those having a double ethylenic unsaturation, optionally mixed with up to 30% by weight of vinyl monomer and containing 0.05-2% by weight of grafting monomers;

vi) growth of the so-obtained particles with a third layer of resin grafted on the second layer of elastomer, through feeding and polymerization of esters of methacrylic acid, optionally mixed with minor amounts of $C_1$-$C_8$ alkyl or alkoxy-alkyl esters of acrylic acid and of vinyl monomers, until the desired particle size is reached.

**10.** Process according to claim 9 ,wherein the polymerization reactions described in steps (i) to (vi) are carried out batchwise or semi-continuously, at temperatures of from 15 to 70°C, and, more preferably, of from 15 to 60°C in case of a batchwise reaction mode, and of from 30 to 70°C in case of a semi-continuous process.

## Patentansprüche

**1.** Schlagzähe transparente Zusammensetzungen mit geringer Trübung, die umfassen:

a) 40 bis 99 Gew.-% eines thermoplastischen Harzes, basierend auf Homopolymeren und/oder Copolymeren von Methacrylsäurealkylestern mit Acrylsäurealkylestern, worin die Alkylgruppen 1 bis 8 Kohlenstoffatome besitzen, und

b) 60 bis 1 Gew.-% eines Polymers mit einer Mehrschichtstruktur, das umfaßt:

- einen inneren Kern basierend auf einem vernetzten Elastomer, das innig mit einem wie unter (a) definierten Acrylharz vermischt ist;
- wahlweise eine erste Schicht dieses Acrylharzes, aufgepfropft auf den inneren Kern; und
- eine Zweite Schicht vernetztes Elastomer, aufgepfropft auf die erste Harzschicht bzw. den Kern; und
- eine dritte Acrylharzschicht, aufgepfropft auf die zweite Schicht vernetzten Elastomers;

worin der innere Kern von 0,01 bis 10 Gew.-%, z.B. 0,3 bis 7 Gew.-% Elastomer, umfaßt, und das Elastomer aus Produkten ausgewählt ist, die eine Glasübergangstemperatur von gleich oder weniger als 25°C, und besonders bevorzugt von weniger als -10°C, besitzen.

**2.** Zusammensetzungen nach Anspruch 1, worin das Mehrschichtpolymer umfaßt:

5-60 Gew.-%, z. B. 8 bis 30 Gew.-%, inneren Kern;

0-55 Gew.-%, z. B. 10 bis 40 Gew.-%, erste aufgepfropfte Acrylharzschicht;

20-50 Gew.-%, z. B. 25 bis 45 Gew.-%, vernetztes Elastomer als Zweite Schicht; und

15-35 Gew.-%, z. B. 18 bis 30 Gew.-% äußeres Acrylharz als dritte Schicht.

**3.** Zusammensetzung nach irgendeinem der vorhergehenden Ansprüche, worin die Methacrylsäurealkylester ausgewählt sind aus Methylmethacrylat, Ethylmethacrylat, Isopropylmethacrylat, sec.-Butylmethacrylat, tert.-Butylmethacrylat, wahlweise gemischt mit geringen Mengen Alkyl-und/oder Alkoxyalkylestern von Acrylsäure oder Vinylmonomeren.

**4.** Zusammensetzung nach irgendeinem der vorhergehenden Ansprüche, worin das Acrylharz ein Methylmethacrylatpolymer ist, das 0 bis 25 Gew.-%, vorzugsweise 5 bis 20 Gew.-%, an einem oder mehreren Comonomere enthält, die ausgewählt sind aus Acrylsäureestern, wie Ethyl-, Methyl-, Butyl-, und Isopropylacrylat, Alkoxyalkylacrylaten, wie 2-Methoxyethylacrylat, und Vinylmonomeren, wie Acrylnitril, Acrylamid, und Styrol und seinen Derivaten.

**5.** Zusammensetzung nach Anspruch 4, worin das Acrylharz auf Methylmethacrylat, enthaltend 5-20 Gew.-% Ethyl- oder Methylacrylat, basiert.

**6.** Zusammensetzung nach irgendeinem der vorhergehenden Ansprüche, worin das Elastomer unter solchen Elastomeren ausgewählt ist, die aus Acrylsäurealkylestern erhältlich sind, worin die Alkylgruppe 1 bis 8 Kohlenstoffatome besitzt, beispielsweise n-Butylacrylat, Isobutylacrylat, 2-Ethylhexylacrylat, Methylacrylat, Ethylacrylat, Propylacrylat, Isopropylacrylat, oder aus Alkoxyalkylacrylaten, wie 2-Methoxyethylacrylat, oder aus doppelt ethylenisch ungesättigten Monomeren, wie Butadien, substituiertem Butadien, beispielsweise Isopren, Chloropren, 2,3-Dimethylbutadien, wahlweise gemischt mit bis zu 30 Gew.-% Vinylmonomeren, z. B. Styrol und seinen Derivaten, wie Methylstyrole, z. B. ortho- und para-Methylstyrol, ortho- und para-Ethylstyrol, $\alpha$-Methylstyrole, Mono-, Di-, Tri-, Tetra- und Pentachlorstyrol.

**7.** Zusammensetzung nach irgendeinem der vorhergehenden Ansprüche, worin das Elastomer das Copolymer ist, das sich aus Butylacrylat mit Styrol in Mengen von 5 bis 30 Gew.-%, vorzugsweise von 10 bis 14 Gew.-%, zusammensetzt.

**8.** Zusammensetzungen nach irgendeinem der vorhergehenden Ansprüche, die von 0,05 bis 2 Gew.-% und vorzugsweise von 0,1 bis 1 Gew.-%, pro einzelner Schicht, einschließlich des inneren Kerns, Pfropf- und Vernetzungsmonomere umfassen, die ausgewählt sind aus Allylacrylat, Diallylmaleat, Allylmethacrylat, Diallylphthalat, Diallylfumarat und Triallylcyanurat.

**9.** Verfahren zur Herstellung schlagzäher transparenter Zusammensetzungen mit geringer Trübung nach irgendeinem der vorhergehenden Ansprüche, das das Mischen umfaßt von:

a) 40 bis 99 Gew.-% eines Acrylharzes basierend auf Homopolymeren und/oder Copolymeren von Methacrylsäurealkylestern mit Acrylsäurealkylestern, worin die Alkylgruppe 1 bis 8 Kohlenstoffatome besitzt; und

b) 60 bis 1 Gew.-% eines Polymers mit einer Mehrschichtstruktur, erhalten nach folgenden Schritten:

i) Herstellung eines Elastomerkeims in wäßriger Emulsion durch Zuführen und Polymerisieren von Monomeren, die ausgewählt sind aus Alkyl- oder Alkoxyalkylestern von Acrylsäure, worin die Alkylgruppe 1 bis 8 Kohlenstoffatome besitzt, und solchen, die doppelt ethylenisch ungesättigt sind, wahlweise gemischt mit bis zu 30 Gew.-% Vinylmonomer, und enthaltend 0,05 bis 2 Gew.-% Pfropfmonomere;

ii) Schwellen obigen Keims durch Absorption eines oder mehrerer Monomere, ausgewählt aus Methacrylsäurealkylestern, worin die Alkylgruppe 1 bis 8 Kohlenstoffatome besitzt, wahlweise gemischt mit kleineren Mengen $C_1$-$C_8$-Alkyl- oder Alkoxyalkylestern von Acrylsäure, und enthaltend 0,05 bis 2 Gew.-% Pfropfmonomere;

iii) Polymerisation der im Elastomerkeim absorbierten Alkylester zum inneren Kern;

iv) wahlweises Ausdehnen des inneren Kerns mit einer Acrylharzschicht durch Zuführen und Polymerisieren von Methacrylsäureestern, wahlweise gemischt mit Kleineren Mengen $C_1$-$C_8$-Alkyl- oder Alkoxyalkylestern von Acrylsäure, und enthaltend 0,05 - 2 Gew.-% Pfropfmonomere;

v) Ausdehnen der so erhaltenen Partikel mit einer zweiten Elastomerschicht, aufgepfropft auf die erste Schicht durch Zuführen und Polymerisieren von Monomeren der $C_1$-$C_8$-Alkyl- oder Alkoxyalkylester von Acrylsäure, und solchen, die doppelt ethylenisch ungesättigt sind, wahlweise gemischt mit bis zu 30 Gew.-% Vinylmonomer und enthaltend 0,05 bis 2 Gew.-% Pfropfmonomere;

vi) Ausdehnen der so erhaltenen Partikel mit einer dritten Harzschicht, aufgepfropft auf die zweite Elastomerschicht, durch Zuführen und Polymerisieren von Methacrylsäureestern, wahlweise gemischt mit Kleineren Mengen $C_1$-$C_8$-Alkyl- oder Alkoxyalkylestern von Acrylsäure, und von Vinylmonomeren, bis die gewünschte Partikelgröße erreicht ist.

**10.** Verfahren nach Anspruch 9, worin die in den Schritten (i) bis (vi) beschriebenen Polymerisationsreaktionen batchweise oder halbkontinuierlich bei Temperaturen von 15 bis 70 °C ausgeführt werden, im Falle eines batchweisen Reaktionsmodus besonders bevorzugt von 15 bis 60°C, und im Falle eines halbkontinuierlichen Prozesses besonders bevorzugt von 30 bis 70°C.

## Revendications

1. Compositions transparentes de faible opacité, résistantes aux chocs comprenant:
   a) 40 à 99% en poids d'une résine thermoplastique à base d'homopolymères et/ou copolymères d'esters d'alkyle d'acide méthacrylique avec des esters d'alkyle d'acide acrylique, dans lesquels le groupe alkyle contient de 1 à 8 atomes de carbone, et
   b) 60 à 1% en poids d'un polymère ayant une structure multicouche comprenant:
   - un noyau central à base d'un élastomère réticulé intimement mélangé avec une résine acrylique telle que définie dans (a);
   - une première couche éventuelle de ladite résine greffée sur le noyau central; et
   - une seconde couche de l'élastomère réticulé greffé sur ladite première couche de résine ou ledit noyau respectivement; et
   - une troisième couche de résine greffée sur ladite seconde couche d'élastomère réticulé,
   dans lesquelles le noyau central comprend de 0,01 à 10% en poids, de préférence de 0,3 à 7% en poids, d'un élastomère et l'élastomère est sélectionné parmi les produits ayant une température de transition vitreuse égale à ou inférieure à 25°C, et de préférence inférieure à -10°C.

2. Compositions selon la revendication 1, dans lesquelles le polymère multicouche comprend: 5 à 60% en poids, de préférence 8 à 30% en poids, d'un noyau central;
   0 à 55% en poids, de préférence de 10 à 40% en poids, d'une première couche de résine acrylique greffée;
   20 à 50% en poids, de préférence de 25 à 45% en poids, d'un élastomère réticulé présent en tant que seconde couche; et
   15 à 35% en poids, de préférence de 18 à 30% en poids, d'une résine acrylique externe présente en tant que troisième couche.

3. Composition selon l'une quelconque des revendications précédentes, dans lesquelles les esters d'alkyle d'acide méthacrylique sont sélectionnés parmi le méthacrylate de méthyle, méthacrylate d'éthyle, méthacrylate d'isopropyle, méthacrylate de sec.-butyle, méthacrylate de tert.-butyle, éventuellement mélangés avec des quantités mineures d'esters d'alkyle ou d'alcoxyalkyle d'acide acrylique ou de monomères vinyliques.

4. Composition selon l'une quelconque des revendications précédentes, dans lesquelles la résine acrylique est un polymère de méthacrylate de méthyle contenant 0 à 25% en poids, de préférence 5 à 20% en poids, de l'un ou plusieurs des comonomères sélectionnés parmi: les esters d'acide acrylique, tels que l'acrylate d'éthyle, de méthyle, de butyle, d'isopropyle, les acrylates d'alcoxyalkyle, tels que l'acrylate de 2-méthoxyéthyle et les monomères vinyliques, tels que l'acrylonitrile, l'acrylamide, le styrène et ses dérivés.

5. Compositions selon la revendication 4, dans lesquelles la résine acrylique est à base de méthacrylate de méthyle contenant de 5 à 20% en poids d'acrylate d'éthyle ou de méthyle.

6. Compositions selon l'une quelconque des revendications précédentes, dans lesquelles l'élastomère est sélectionné parmi ceux qui sont susceptibles d'être obtenus à partir d'esters d'alkyle d'acide acrylique dans lesquels le groupe alkyle contient de 1 à 8 atomes de carbone, tels que l'acrylate de n-butyle, l'acrylate d'isobutyle, l'acrylate de 2-éthyl-hexyle, l'acrylate de méthyle, l'acrylate d'éthyle, l'acrylate de propyle, l'acryle d'isopropyle, ou à partir d'acrylates d'alkyloxyalkyle, tels que l'acrylate de 2-méthoxy-éthyle, ou à partir de monomères ayant une double insaturation éthylénique tels que le butadiène, le butadiène substitué, tel que isoprène, chloroprène, 2,3-diméthylbutadiène, éventuellement mélangé avec jusqu'à 30% en poids de monomères vinyliques, tels que le styrène et ses dérivés, tels que le méthyl-styrène, tel que ortho- et para-méthylstyrène, ortho- et para-éthylstyrène, alpha-méthylstyrène, mono-, di-, tri-, tétra- et penta-chlorostyrène.

7. Compositions selon l'une quelconque des revendications précédentes, dans lesquelles l'élastomère est un copolymère constitué par de l'acrylate de butyle contenant du styrène dans des quantités allant de 5 à 30% en poids, de préférence de 10 à 14% en poids.

8. Compositions selon l'une quelconque des revendications précédentes, comprenant de 0,05 à 2% en poids, et de préférence de 0,1 à 1% en poids, dans chaque couche individuelle, incluant le noyau central, de monomères de greffage ou de réticulation sélectionnés parmi: l'acrylate d'allyle, le maléate de diallyle, le méthacrylate d'allyle, le phtalate de diallyle, le fumarate de diallyle, et le cyanurate de triallyle.

9. Procédé pour la préparation de compositions transparentes de faible opacité résistantes aux chocs selon l'une quelconque des revendications précédentes comprenant le mélange:

a) 40 à 99% en poids d'une résine acrylique à base d'homopolymères et/ou de copolymères d'esters d'alkyle d'acide méthacrylique avec des esters d'alkyle d'acide acrylique dans lesquels le groupe alkyle contient de 1 à 8 atomes de carbone, et

b) de 60 à 1% en poids d'un polymère ayant une structure multicouche obtenue selon les étapes suivantes:

i) préparation d'un germe d'élastomère en émulsion aqueuse par addition et polymérisation de monomères sélectionnés parmi les esters d'alkyle ou alcoxyalkyle d'acide acrylique dans lesquels le groupe alkyle contient de 1 à 8 atomes de carbone, et parmi ceux contenant une double insaturation éthylénique, éventuellement mélangés avec jusqu'à 30% en poids de monomères vinyliques et contenant de 0,05 à 2% en poids de monomères de greffage;

ii) le gonflement du germe ci-dessus par absorption d'un ou de plusieurs monomères sélectionnés parmi les esters d'alkyle d'acide méthacrylique dans lesquels le groupe alkyle contient de 1 à 8 atomes de carbone éventuellement mélangé avec des quantités mineures d'esters d'alkyle ou d'alcoxyalkyle en $C_1$-$C_8$ d'acide acrylique et contenant de 0,05 à 2% en poids de monomères de greffage;

iii) polymérisation de ces dits esters d'alkyle absorbés dans le germe élastomère pour former un noyau central;

iv) éventuellement croissance de ce noyau central avec une première couche de résine acrylique par addition et polymérisation d'esters d'acide méthacrylique éventuellement mélangée avec des quantités mineures d'esters d'alkyle ou d'alcoxyalkyle en $C_1$-$C_8$ d'acide acrylique et contenant de 0,05 à 2% en poids de monomères de greffage;

v) croissance des particules ainsi obtenues avec une seconde couche d'élastomère greffé sur la première couche par addition et polymérisation de monomères sélectionnés parmi les esters d'alkyle ou d'alcoxyalkyle en $C_1$-$C_8$ d'acide acrylique et parmi ceux ayant une double insaturation éthylénique, éventuellement mélangés avec jusqu'à 30% en poids de monomères vinyliques et contenant de 0,05 à 2% en poids de monomères de greffage;

vi) croissance des particules ainsi obtenues avec une troisième couche de résine greffée sur la deuxième couche d'élastomère par addition et polymérisation d'esters d'acide méthacrylique éventuellement mélangés avec des quantités mineures d'esters d'alkyle ou d'alcoxyalkyle en $C_1$-$C_8$ d'acide acrylique et de monomères vyniliques jusqu'à ce que la dimension particulaire désirée soit obtenue.

10. Procédé selon la revendication 9, dans lequel les réactions de polymérisation décrites dans les étapes (i) jusqu'à (vi) sont réalisées soit par lots, soit de façon semi-continue, à des températures allant de 15 à 60°C et de préférence de 15 à 60°C dans le cas d'un mode de réalisation par lots et de 30 à 70°C dans le cas d'un procédé semi-continu.